(19) Europäisches Patentamt
European Patent Office
Office européen des brevets

(11) Publication number: **0 165 812 B1**

# (12) EUROPEAN PATENT SPECIFICATION

(45) Date of publication of patent specification: **09.11.88**

(51) Int. Cl.⁴: **C 08 G 73/12**

(21) Application number: **85304392.5**

(22) Date of filing: **19.06.85**

## (54) Thermosetting imide resin compositions.

(30) Priority: **22.06.84 GB 8416024**

(43) Date of publication of application: **27.12.85 Bulletin 85/52**

(45) Publication of the grant of the patent: **09.11.88 Bulletin 88/45**

(84) Designated Contracting States: **AT BE CH DE FR GB IT LI NL SE**

(56) References cited:
WO-A-84/02528
DE-A-2 019 436
DE-A-2 843 035
FR-A-2 304 639
US-A-3 763 273

(73) Proprietor: **The Secretary of State for Defence in Her Britannic Majesty's Government of the United Kingdom of Great Britain and Northern Ireland Whitehall London SW1A 2HB (GB)**

(72) Inventor: **Kinloch, Anthony James**
**22 Heath Row Bishops Stortford Hertfordshire (GB)**
Inventor: **Shaw, Stephen James**
**80 Winstanley Road Saffron Walden Essex (GB)**

(74) Representative: **Beckham, Robert William et al**
**Procurement Executive Ministry of Defence Patents 1A(4), Room 2014 Empress State Building Lillie Road London SW6 1TR (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 165 812 B1

**Description**

This invention relates to thermosetting imide resin compositions containing elastomers, to methods of preparing these compositions, and to elastomer-toughened polyimides cured from these compositions. In particular but not exclusively, this invention is concerned with the elastomer-toughening of addition-type polyimides which are produced from the polymerisation and crosslinking of bismaleimide prepolymers.

Thermoset polyimides are organic polymers which in general have very high thermal and oxidative stabilities. They are used in a number of industrial applications, especially as adhesives and structural composites. Most polyimides fall within the category of addition-type or condensation-type polyimides according to the type of polymerization reaction which produces them from their prepolymer constituent or constituents. Condensation-type polyimides are generally produced from dianhydrides and diamines via the formation of a soluble polyamic acid precursor. The formation of the polyimide from the polyamic acid is known as cyclodehydration and entails the liberation of water which, under the reaction conditions, is liberated as a vapour which can create voids in the polymer. Addition-type polyimide prepolymers are cured by an addition reaction which overcomes the problem caused by volatile evolution of water, and thus addition-type polyimides possess a significant advantage over condensation type polyimides.

One disadvantage of addition-type polyimides however is that they depend to a large degree on a highly crosslinked structure for high temperature capabilities, which structure can result in brittle behaviour. Some of the more brittle addition-type polyimides have been toughened by the chain extension of the imide prepolymer molecules, which has resulted in the polyimides cured therefrom having more open flexible molecular structures than their unmodified, brittle counterparts. However, this increase in toughness has usually been found to be offset by a major reduction in other desirable properties of the polyimides, such as glass transition temperature, thermal stability and mechanical strength, because chain extension of the prepolymer reduces the density of inter-molecular cross-links in the polyimide structure.

Attempts have been made to improve the toughness of addition-type polyimides by the addition of elastomers. St Clair *et al* (Int J Adhesion and Adhesives, July 1981 page 249) reported an up to 5 fold increase in the toughness (in terms of increased fracture energy) of an addition-type polyimide prepared from a bisimide prepolymer having nadic end groups, by the addition of either aromatic amine-terminated butadiene/acrylonitrile (AATBN) or aromatic amine-terminated silicone (AATS) to the prepolymer. However, one disadvantage of using either of these two elastomers is that they do not appear suitable for toughening some other types of addition-type polyimides. Gollob *et al* (Massachusetts Institute of Technology School of Engineering Research Report R79—1, August 1979) reported that the toughness of a bismaleimide-type polyimide was little changed by the addition of either of these two elastomers to the bismaleimide prepolymer prior to curing.

It is one object of the present invention to provide a novel method for preparing an elastomer-toughened polyimide whereby the above disadvantage is overcome or at least mitigated in part. Other objects and advantages of the present invention will be evident from the following detailed description thereof.

According to the present invention there is provided a method for preparing a thermosetting imide resin composition which comprises chemically reacting a liquid mixture of a vinylidene-terminated polybutadiene/ acrylonitrile (VTBN) and a co-reactant comprising

a. at least one N,N′-bisimide of an unsaturated carboxylic acid of general formula I

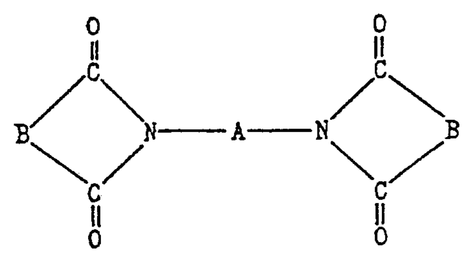

I

wherein B represents a divalent radical containing a carbon-carbon double bond and A represents a divalent radical having at least two carbon atoms, or

b. the imide resin reaction product of at least one N,N′-bisimide of general formula I and at least one primary organic diamine or organic hydrazide, or

c. the imide resin reaction product of at least one N,N′-bisimide of general formula I, at least one monoimide, and at least one organic hydrazide,

to yield a thermosetting imide resin composition containing copolymerised VTBN and co-reactant, said composition being curable at a temperature between 100°C and 350°C to a fully crosslinked polyimide matrix containing a dispersion of phase-separated solid particles of copolymerised VTBN and co-reactant. The matrix preferably has a lap shear strength at 20°C at least 50% greater than that of a fully crosslinked polyimide cured from the co-reactant alone.

Since the rate of homopolymerisation of the co-reactant is temperature dependent, it is important that the temperature selected for the VTBN/co-reactant copolymerisation reaction is low enough for the co-reactant to remain in a ungelled state for a sufficient length of time to allow the VTBN to copolymerise with the co-reactant and form into phase-separated particles in the reaction mixture within that time. For this reason, the copolymerisation reaction is conveniently carried out at a temperature in the range of 100—200°C (provided of course that both the co-reactant and the VTBN are in a liquid state at the temperature selected), preferably below 150°C.

In the at least one bisimide of general formula I, the group B is preferably selected from

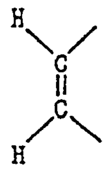 , 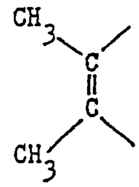 , 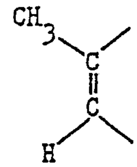 , and 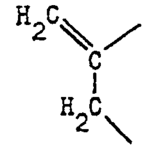

and most preferably the at least one bisimide comprises at least one of the following bisimides:

1,2-bismaleimido ethane,
1,4-bismaleimido butane,
1,6-bismaleimido hexane,
1,12-bismaleimido dodecane,
1,6-bismaleimido-(2,2,4-trimethyl)hexane,
1,3-bismaleimido benzene,
1,4-bismaleimido benzene,
4,4'-bismaleimido diphenyl methane,
4,4'-bismaleimido diphenyl ether,
4,4'-bismaleimido diphenyl sulfide,
4,4'-bismaleimido diphenyl sulfone,
4,4'-bismaleimido dicyclohexyl methane,
2,4-bismaleimido toluene,
2,6-bismaleimido toluene,
N,N'-m-xylylene bismaleimide,
N,N'-p-xylylene bismaleimide,
N,N'-m-phenylene biscitraconic acid imide,
N,N'-4,4'-diphenylmethane citraconimide, and
N,N'-4,4'-diphenylmethane bisitaconimide.

The co-reactant may comprise the reaction product of the at least one bisimide of general formula I and at least one primary organic diamine of general formula II

$$H_2N—D—NH_2 \qquad \text{II}$$

wherein D represents a divalent radical having not more than 30 carbon atoms, provided that the ratio of the total number of moles of bisimide of general formula I to the total number of moles of diamine of general formula II in the reaction mixture lies in the range 1.2:1 to 50:1. Such reaction products and methods of preparation thereof are disclosed in US Patent No. 3562223. Examples of diamines of general formula II which may be employed, are 4,4'-diaminodicyclohexylmethane, 1,4-diaminocyclohexane, 2,6-diaminopyridine, metaphenylene-diamine, paraphenylenediamine, 4,4'-diaminodiphenylmethane, 2,2-bis(4-aminophenyl)propane, benzidine, 4,4'-diaminophenyl oxide, 4,4'-diaminodiphenyl sulphide, 4,4'-diaminodiphenylsulphone, bis-(4-aminophenyl)di-phenylsilane, bis-(4-aminophenyl)methylphosphine oxide, bis-(3-aminophenyl)methylphosphine oxide, bis-(4-aminophenyl) phenylphosphine oxide, bis-(4-aminophenyl) phenylamine, 1,5-diaminonaphthalene, metaxylylene-diamine, paraxylylene diamine, 1,1-bis(paraaminophenyl)phthalene, and hexamethylenediamine.

Alternatively, the co-reactant may comprise the reaction product of the at least one bisimide of general formula I and at least one organic hydrazide of general formula III

$$H_2N—NH—\overset{\overset{\displaystyle O}{\|}}{C}—E—\overset{\overset{\displaystyle O}{\|}}{C}—NH—NH_2 \qquad \text{III}$$

wherein E represents a divalent organic group, provided that the ratio of the total number of moles of bisimide of general formula I to the total number of moles of hydrazide of general formula III in the reaction mixture lies in the range of 1.1:1 to 10:1. Such reaction products and methods of preparation thereof are disclosed in US Patent No 4211860. Examples of hydrazides of general formula III which may be employed include

Oxalic acid dihydrazide,
malonic acid dihydrazide,
succinic acid dihydrazide,

glutaric acid dihydrazide,
adipic acid dihydrazide,
pimelic acid dihydrazide,
suberic acid dihydrazide,
sebacic acid dihydrazide,
cyclohexane dicarboxylic acid dihydrazide,
terephthalic acid dihydrazide,
isophthalic acid dihydrazide,
2,6-naphthalene dicarboxylic acid dihydrazide, and
2,7-naphthalene dicarboxylic acid dihydrazide.

The co-reactant may also comprise the reaction product of the at least one bisimide of general formula I and at least one organic hydrazide of general formula IV

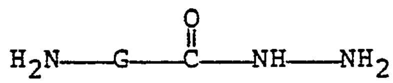

IV

wherein G represents a divalent organic group, provided that the total number of moles of bisimide of general formula I to the total number of moles of hydrazide of general formula IV lies in the range 1.1:1 to 10:1. Such reaction products and methods of preparation thereof are disclosed in US Patent No 4211861. Examples of hydrazides of general formula IV which may be employed include

Amino acetic acid hydrazide,
alanine hydrazide,
leucine hydrazide,
isoleucine hydrazide,
phenyl alanine hydrazide,
valine hydrazide,
β-alanine hydrazide,
γ-amino butyric acid hydrazide,
α-amino butyric acid hydrazide,
ε-amino caproic acid hydrazide,
amino valeric acid hydrazide,
and other aliphatic amino acid hydrazides.
Aromatic amino acid hydrazides such as
p-amino benzoic acid hydrazide,
p-amino benzoic acid hydrazide,
m-amino benzoic acid hydrazide,
anthranilic acid hydrazide, may also be used.

As a yet further alternative, the co-reactant may comprise the reaction product of the at least one bisimide of general formula I, at least one monoimide of general formula V

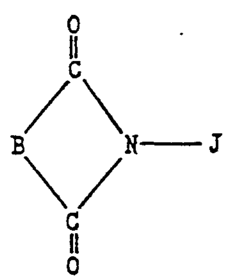

V

wherein B represents a divalent radical containing a carbon-carbon double bond and J represents an alkyl, cycloalkyl, or aryl group, and at least one organic hydrazide of general formula III

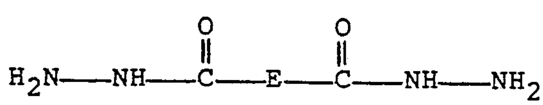

III

wherein E represents a divalent organic group. Such reaction products and methods of preparation thereof are disclosed in US Patent No 4303779. Examples of monoimides of general formula V which may be employed include

N-methylmaleimide,
N-ethylmaleimide,
N-propylmaleimide,
N-dodecylmaleimide,
N-isobutylmaleimide,

N-isopropylmaleimide,
N-phenylmaleimide,
N-phenylcitroconimide,
N-phenylitaconimide,
N-toluylmaleimide,
N-mono-chlorophenylmaleimide,
N-biphenylmaleimide,
N-naphthylmaleimide,
N-vinylmaleimide,
N-allylmaleimide, and
N-cyclohexylmaleimide.

Where the co-reactant comprises the imide resin reaction product of either

i. the at least one bisimide of general formula I and at least one primary organic diamine or organic hydrazide, or

ii. the at least one bisimide of general formula I, at least one monoimide, and at least one organic hydrazide,

one monoimide, and at least one organic hydrazide,

then conveniently the co-reactant may also comprise, at least in part, a portion of the reagents of this reaction product, particularly if the effect of the presence of these reagents is to reduce the melting point and melt viscosity of the co-reactant and thereby render it more suitable for use in the method of the present invention.

It is preferable that the VTBN polymer be fully molten below 150°C, preferably below 120°C, so that it can be intimately mixed with the imide resin co-reactant to allow copolymerisation to take place. It is essential that the VTBN is sufficiently compatible with the co-reactant for it to be at least partially mixable with the co-reactant such that copolymerisation can be substantially completed before the co-reactant reaches its gel point, although it is not essential that the VTBN and co-reactant be soluble in one another. The degree of compatibility is found to increase with increasing content of polar groups, ie acrylonitrile groups, in the VTBN. However, it is also essential that the copolymer produced is sufficiently incompatible with the co-reactant such that it will form into phase separated particles within the mixture before the co-reactant reaches its gel point. This copolymer incompatibility is found to decrease with increasing acrylonitrile content, and so a compromise has to be found in terms of VTBN acrylonitrile content. Preferably, therefore, the molar ratio of butadiene groups to acrylonitrile groups in the VTBN lies in the range 99:1 to 65:35.

The VTBN may be selected from any of the different types of VTBN known in the art. It may for example be of general formula VI

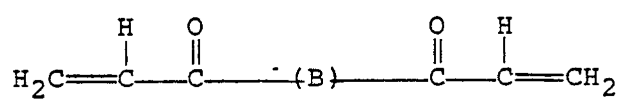

VI

where B is a polybutadiene/acrylonitrile polymeric backbone. Alternatively, the VTBN may be of general formula VII

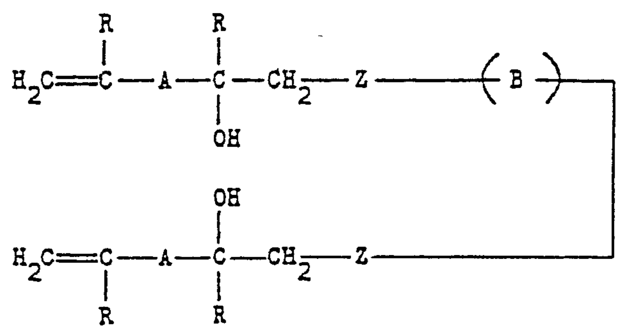

VII

where B is a polybutadiene/acrylonitrile polymeric backbone; Z is selected from —O—, —S—, —NH—, O—CO— and —O—$CH_2$—$CH_2$—; A is selected from —CO—O—$CH_2$, —$CH_2$—O—$CH_2$— and —$CH_2$—O—; and each R is independently hydrogen or an alkyl group containing 1 to 4 carbon atoms. This alternative group of VTBN's are described and claimed in US Patent Nos 4,013,710 and 4,129,713.

In general, the lower the molecular weight of the VTBN polymer, the lower its viscosity at a given temperature will be and the more likely it will mix with the molten resin. However, although the molecular weight of the VTBN polymer is important in determining its fluid properties and hence its ability to mix with the resin, it also has other important effects on the reaction with the resin. The use of a VTBN of low molecular weight also enables a very large number of copolymerisation reactions to take place in the resin/elastomer mixture before phase separation of the imide copolymer takes place. This in turn facilitates the

production of a highly toughened polyimide which better retains the thermal and oxidative properties of the polyimide *per se* than if a VTBN of higher molecular weight were used. However, an undesirable effect of decreasing the molecular weight of the elastomer is that the time taken to achieve phase separation of the imide copolymer is generally increased, and this in turn increases the possibility of the resin matrix reaching its gel point before phase separation occurs. It is therefore important to select a VTBN polymer having a molecular weight which is generally as low as possible whilst still enabling phase separation of copolymer particles to take place before the resin matrix gels. Preferably, the molecular weight of the VTBN polymer lies in the range 1000—10,000.

A number of analytical techniques may be used to demonstrate that, in the reaction mixture comprising the VTBN and the reactant, copolymerisation followed by phase separation has taken place. Phase separation must take place before the co-reactant gels, because after that point the copolymer produced cannot migrate into particles, a fact well established in the art of toughening thermoset polymers by the addition of elastomers. Firstly the rate of reduction of imide groups may be detected in a copolymerising mixture of the VTBN and the co-reactant, and, if greater than the rate of reduction of imide groups in the co-reactant left to stand by itself at the same temperature, this indicates that copolymerisation as well as homopolymerisation is taking place in the reaction mixture. For example, the concentration of imide groups may be measured in each sample using infra-red absorption techniques; any reduction in concentration will register as a reduction in one or more absorbed wavelengths unique to those imides present in the mixture.

Scanning Electron Microscopy (SEM) may be used on the fractured faces of portions of the sample, once cured, to detect the presence of solid phase separated particles therein. In detecting the presence of particles in the cured sample, SEM confirms that two solid phases exist in the sample and, since VTBN polymers are not known to undergo homopolymerisation, that one of the solid phases must therefore comprise a copolymer of the resin and the elastomer. Furthermore, it may be demonstrated by SEM that the volume fraction of the particles (in cured samples of toughened polyimides prepared in accordance with the present invention) decreases with decreasing sample VTBN content, proving that the particle phase in the sample comprises or contains the resin VTBN copolymer. The term "phase separation" as used in this specification includes the average diameter of the particles which form in the mixture of the resin and VTBN is preferably between 0.1 and 10 µm, most preferably 0.5 and 8 µm.

The volume fraction of the phase separated particles in the polyimide is preferably equal to or greater than the volume fraction of VTBN in the liquid reaction mixture prior to copolymerisation.

The present invention further provides a method for preparing a fully crosslinked polymer matrix containing a dispersion of phase-separated solid particles of copolymerised VTBN and co-reactant, which comprises the further step of heating the thermosetting imide resin composition to a temperature between 100°C and 350°C.

Polyimides cured from the thermosetting imide resin compositions prepared in accordance with the method of the present invention are found to possess as much as 29 times the toughness (in terms of increased fracture energy), of polyimides cured from the corresponding imide resin-containing co-reactant alone. Furthermore, these novel elastomer-toughened polyimides are also invariably stronger and have the same or even a higher glass transition temperature at the expense of only a moderately small decrease in decomposition temperature. The optimum concentration of VTBN in the imide resin composition which produces polyimides having considerable improvements in toughness without a significant reduction in glass transition temperature, decomposition temperature, and flexural modulus, lies in the range 10 to 75 parts by weight of VTBN per 100 parts of co-reactant.

One further advantage of the method of the present invention is that the co-reactant need not necessarily be cured with the VTBN at a pressure in excess of atmospheric pressure. Normally, addition-type polyimide prepolymers (resins) have to be cured under pressure because although the polymerisation reaction does not itself liberate any volatile byproducts, the prepolymers usually contain small amounts of volatile organic solvents which vaporise at typical polyimide pre-polymer curing temperatures, causing gas bubbles to form in the resultant polyimide matrix which is detrimental to the strength of the polyimides. These solvents originate from the manufacture of the prepolymers, and their complete removal from the prepolymers prior to curing is both difficult and expensive; hence most addition type polyimide prepolymers will normally contain small quantities of these solvents as contaminants. Furthermore, where the polyimides are cured from mixtures of imide reagents and either hydrazide or diamine reagents and the reaction products thereof in accordance with US Patent nos 3562223, 4211860, 4211861, or 4303779, the problems of bubble formation may be even more acute because the curing mixture may contain reagents which are themselves volatile, especially if they contain certain organic diamines or organic hydrazides. It is now found that the presence of VTBN in accordance with the process of the present invention suppresses gas formation, so that curing under pressures in excess of atmospheric pressure is normally unnecessary.

One yet further advantage of the present invention is that the long-term tendency for the polyimide products of the present invention to absorb water is markedly reduced, so that the mechanical properties of the products at high temperature are maintained. Known polyimides will slowly absorb water from the atmosphere and other sources with time until they reach an equilibrium water content which is typically 5—10% by weight of the polyimide. This has the effect of considerably reducing polyimide glass transition temperature (Tg) with time.

Methods of preparing curable thermosetting prepolymerised imide resin compositions and of preparing polyimides cured therefrom will now be described by way of example only.

In Examples 1—5 and 8 the imide resin co-reactant used was Compimide 353 which consists of a near-eutectic blend of three bismaleimide resins comprising 4,4'-bismaleimido diphenyl methane, 2,4-bismaleimidotoluene, and 1,6-bismaleimido-(2,2,4-trimethyl)hexane. Compimide 353 is marketed by Technochemie GmbH of West Germany. The Compimide 353 blend melts in the range 70°C to 100°C, and is usually cured in the range 170°C to 240°C, though the minimum temperature at which it will gel over a long period of time is about 120° to 135°C. In Example 6, the imide resin co-reactant used was Compimide 795, also marketed by Technochemie GmbH, which consists of a mixture of an N,N'-bisimide, a hydrazide of an amino acid, and the imide resin reaction product thereof patented under US Patent No 4211861. Compimide 795 has a melting point of about 110°C and is usually cured at about 210°C. In Example 7, the imide resin co-reactant was the reaction product of a diamine and a bismaleimide, which product is patented under and described in US Patent No 3562223.

The VTBN used in Examples 1 to 7 was a Hycar® (Trade Mark) elastomer marketed by the BF Goodrich Company, USA. The Hycar® elastomer used was Hycar® 1300 × 22 VTBN, which is a liquid at room temperature, and has a molecular weight of about 3000, a functionality of about 1.8, and an acrylonitrile content of about 16% by weight. The VTBN used in Example 8 differed from that used in Examples 1 to 7 in that it had an acrylonitrile content of about 27% by weight. It was prepared from Hycar® 1300 × 13 CTBN a carboxy-terminated polybutadiene/acrylonitrile also marketed by B F Goodwich.

The following physical property tests were conducted on samples of fully crosslinked polyimides prepared in accordance with the methods described in the Examples. Sample toughness was measured at 20°C in terms of fracture energy ($G_{IC}$) in $Jm^{-2}$ as determined by ASTM Standard Method E399 1972 using samples prepared in a compact tension specimen geometry, and in terms of lap shear strength in MPa as determined by British Standard Specification 5350 Part C5 "Method of Tests for Adhesives". Increasing fracture energy and/or lap shear strength indicates an increase in toughness. The flexural strength at failure and flexural modulus of elasticity of the samples was determined at room temperature (20°C) by ASTM Standard Method D790—1971. The glass transition temperature (Tg) was determined by thermomechanical analysis using a Stanton-Redcroft Thermomechanical Analyser. Tg indicated the temperature at which a transition from hard elastic to soft rubbery or leather characteristics occurred in the samples with increasing temperature. The decomposition temperature (Td) of the samples was determined by thermogravimetric analysis on the samples in an atmosphere of either air or nitrogen, where the weight loss experienced by a sample was constantly monitored while sample temperature was raised at a prescribed rate. The temperature at which a 10% weight loss occurred was recorded. The average particle size of the phase separated solid particles formed within a sample was determined by first analysing the phase separated particles within a fractured face of the sample by Scanning Electron Microscopy (SEM), followed by estimating average particle size and optionally volume fraction of particles within the sample, by subjecting the analysis results to Spector's Method.

## Example 1

Compimide 353 resin was heated to 120°C until it became a low viscosity liquid. To 100 parts of this molten resin was added 10 parts by weight of liquid Hycar® 1300 × 22 VTBN elastomer also at 120°C. The resin and elastomer were then thoroughly mixed, and the temperature of the mixture was maintained at 120°C for 24 hours, with further thorough mixing every 1—2 hours, to enable the elastomer to copolymerise with the resin. A reaction period of 24 hours was chosen because it was known that at 120°C Compimide 353 resin required at least this period of time before reaching its gel point. The resin and elastomer were found not to be entirely compatible with one another at this temperature, and so the further mixing was important to ensure that intimate intermolecular contact between the resin and the elastomer was maintained throughout the 24 hour period, by breaking up the separate layers of resin and elastomer which formed with time. The periods of time between mixing were used to observe the gradual reduction in size of the elastomer layer as copolymerisation progressed. This elastomer layer which formed on top of the resin was found to disappear altogether after about 24 hours, at which stage the copolymerisation reaction was taken to be virtually complete.

After the completion of the copolymerisation stage, the product was degassed in vacuo at 120°C to remove air entrained during mixing. The product was then cast into preheated moulds, and finally gelled and cured at atmospheric pressure to a fully crosslinked, void-free polyimide by first heating to 170°C for two hours and then to 210°C for a further five hours. The product was then brought back to room temperature by slowly cooling so as to prevent cracking. Fractured samples of the cured, cooled product were subjected to SEM to reveal the presence of phase separated solid particles in the polyimide. The particles were found to have an average size 0.1 to 10 microns.

## Example 2 to 5

The method of Example 1 was repeated using respectively 30 parts (Example 2), 50 parts (Example 3) 75 parts (Example 4) and 100 parts (Example 5) by weight of Hycar® 1300 × 22 VTBN per 100 part of Compimide 353 in the resin/elastomer reaction mixture. SEM analysis conducted on samples of the fully

crosslinked void-free polyimide product revealed the presence of phase separated solid particles of average size between 0.1 and 10 μm.

Samples of polyimide prepared in accordance with the methods of Examples 1 to 5 were subjected to the physical property tests described above. The results of these tests are given in Table 1 below where the properties are compared with those of samples of a Control Example prepared by fully crosslinking Compimide 353 alone using the same curing procedure as employed in Example 1.

TABLE 1

| Example | | Control | 1 | 2 | 3 | 4 | 5 |
|---|---|---|---|---|---|---|---|
| VTBN (phr)* | | 0 | 10 | 30 | 50 | 75 | 100 |
| Fracture Energy $G_{IC}$ ($Jm^{-2}$ @ 20°C) | | 11 | 29±3 | 50 ± 10 | 193 ± 6 | 322 ± 73 | |
| Flexural Strength (MPa) | | 24 | 29±3 | 39 ± 4 | 64 ± 15 | 84 ± 7 | |
| Glass Transition Temperature Tg (°C) | | 257 | | 290 | 285 | 245 | |
| Decomposition Temperature Td (°C, 10% wt loss) | in air | 562 | | 514 | 502 | | |
| | in $N_2$ | 565 | | 523 | 517 | | |
| Flexural Modulus of Elasticity (GPa @ 20°C) | | 4.3 | 4.6 | 3.8 | 3.2 | 2.78 | |
| Lap Shear Strength (MPa at 20°C) | | 4.05 | 6.33 | 6.73 | 9.57 | 11.23 | 12.38 |

*parts by weight of VTBN per 100 parts by weight of Compimide 353 resin.

From the results given in Table 1, it may be seen that polyimides cured from mixtures of Compimide 353 resin and Hycar® 1300 × 22 VTBN prepared in accordance with the present invention undergo, with increasing VTBN content, a marked increase in toughness together with a modest increase in flexural strength and glass transition temperature, up to a VTBN content of 50 parts per hundred (phr) at least. The thermal stability of these toughened polyimides as measured by $T_D$ is not unduly reduced in comparison with the untoughened Control Example.

Example 6

The method of Example 1 was repeated using Compimide 795 resin instead of Compimide 353 resin, and 50 phr (parts per hundred by weight) of Hycar® 1300 × 22 VTBN.

Samples of polyimide prepared in accordance with the method of Example 6 were tested to measure toughness and to detect the presence of phase separated particles. Phase separated solid particles of average size between 0.1 and 10 μm were detected by SEM analysis. The polyimide prepared by the method of Example 6 was cured at atmospheric pressure without gas bubbles being detected in the polyimide matrix when curing was complete. The Fracture Energy $G_{IC}$ of the samples of polyimide prepared in accordance with the method of Example 3 was measured at 400 ± 20 $Jm^{-2}$ at 20°C, and their average Flexural Modulus of Elasticity was measured at 2.0 GPa at 20°C.

Example 7

A polyimide prepolymer co-reactant was prepared in accordance with the invention described in US Patent No 3562223. 300 grams of Compimide 353 resin was first ground to a powder at room temperature in a mortar and pestle. To the ground powder was admixed 30 grams of diamino diphenyl sulphone powder. The mixture was then ground to a fine powder in a ball mill for 1 hour, using 6—18 mm diameter ceramic balls revolving in an 8 cm diameter drum at 50 revolutions per minute. The resulting fine, powdered mixture was then melted at 120°C for 1 hour with occasional mixing, to produce the required molten co-reactant resin.

165 grams of Hycar® 1300 × 22 VTBN at 120°C was admixed to the molten co-reactant at 120°C, producing a molten mixture containing 30 phr of VTBN. The molten mixture was maintained at 120°C for 8 hours, with further thorough mixing approximately every hour during the 8 hours, until the separate VTBN elastomer layer which formed on top of the resin layer had disappeared, indicating that the VTBN/resin copolymerisation reaction was completed. The copolymerised mixture was degassed under vacuum for 30 minutes at 120°C, and was then cast into preheated moulds also at 120°C. The cast mixture was first gelled and then cured to a fully cross-linked, void-free polyimide by heating at atmospheric pressure to 170°C for 2 hours and then to 210°C for a further 5 hours, and subsequently slowly cooling the product to room temperature.

Fractured samples of the cured, cooled product were subjected to SEM to reveal the presence of phase separated solid particles of average size between 0.1 and 10 μm in the polyimide product. The lap shear strength of samples of the product was found in all cases to be greater than that of a sample of polyimide cured from the co-reactant alone by the same curing sequence as described above though at a pressure well in excess of atmospheric pressure in order to suppress bubble formation. The average Fracture Energy $G_{IG}$ of the samples of polyimide prepared in accordance with the method of Example 4 was measured at 223 $Jm^{-2}$ at 20°C, and their average Flexural Modulus of Elasticity was measured at 1.9 GPa at 20°C.

Example 8

The method of Example 1 was repeated using 30 phr VTBN containing about 27% acrylonitrile by weight. This VTBN was prepared from 27% acrylonitrile carboxy-terminated polybutadiene/acrylonitrile marketed as Hycar® 1300 × 13 CTBN by BF Goodrich, by the known reaction procedure generally outlined in US Patent Nos 4,129,713 and 4,013,710. Phase separated solid particles of average size 0.1 to 10 μm were detected in the cooled product by SEM. Other properties of the product were as follows:—

| | |
|---|---|
| Fracture Energy: | 51.7 $Jm^{-2}$ at 20°C |
| Flexural Strength: | 72 ± 25 MPA |
| Glass Transition Temperature: | 275°C |
| Flexural Modulus of Elasticity: | 3.14 GPa at 20°C |

**Claims**

1. A method for preparing a thermosetting imide resin composition comprising chemically reacting a liquid mixture of a vinylidene-terminated polybutadiene/acrylonitrile (VTBN) and a co-reactant comprising

a. at least one N,N'-bisimide of an unsaturated carboxylic acid of general formula I

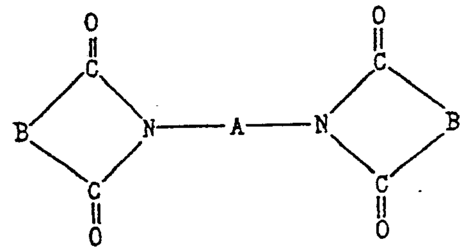

I

wherein B represents a divalent radical containing a carbon-carbon double bond and A represents a divalent radical having at least two carbon atoms, or

b. the imide resin reaction product of at least one N,N'-bisimide of general formula I and at least one primary organic diamine or organic hydrazide, or

c. the imide resin reaction product of at least one N,N'-bisimide of general formula I, at least one monoimide, and at least one organic hydrazide,

to yield a thermosetting imide resin composition containing copolymerised VTBN and co-reactant, said composition being curable at a temperature between 100°C and 350°C to a fully cross-linked polyimide matrix containing a dispersion of phase separated solid particles of copolymerised VTBN and co-reactant.

2. A method according to claim 1 characterised in that the average particle size of the phase separated particles, as determined by Scanning Electron Microscopy, lies in the range 0.1 to 10 µm, preferably 0.5 to 8 µm.

3. A method according to claim 1 or claim 2 characterised in that the co-reactant comprises the reaction product of at least one N,N'-bisimide of general formula I wherein A and B are as defined in claim 1, and at least one primary organic diamine of general formula II

$$H_2N—D—NH_2 \qquad II$$

wherein D represents a divalent radical having not more than 30 carbon atoms, and further characterised in that the ratio of the total number of moles of bisimide of general formula I to the total number of moles of diamine of general formula II in the reaction mixture lies in the range 1.2:1 to 50:1.

4. A method according to claim 1 or claim 2 characterised in that the co-reactant comprise the reaction product of at least one N,N'-bisimide of general formula I wherein A and B are as defined in Claim 1, and at least one organic hydrazide of general formula III

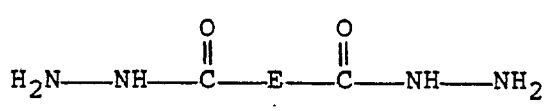

III

wherein E represents a divalent organic group, and further characterised in that the ratio of the total number of moles or bisimide of general formula I to the total number of moles of hydrazide of general formula III in the reaction mixture lies in the range 1.1:1 to 10:1.

5. A method according to claim 1 or claim 2 characterised in that the co-reactant comprises the reaction product of at least one N,N'-bisimide of general formula I wherein A and B are as defined in claim 1, and at least one organic hydrazide of general formula IV

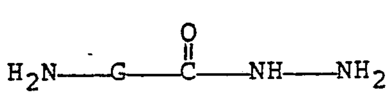

IV

wherein G represents a divalent organic group, and further characterised in that the total number of moles of bisimide of general formula I to the total number of moles of hydrazide of general formula IV lies in the range 1.1:1 to 10:1.

6. A method according to claim 1 or claim 2 characterised in that the co-reactant comprises the reaction

product of at least one N,N′-bisimide of general formula I wherein A and B are as defined in claim 1, and at least one monomide of general formula V

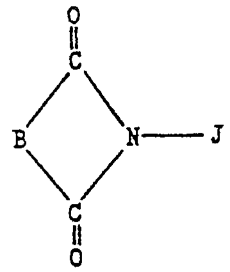

V

wherein B represents a divalent radical containing a carbon-carbon double bond and J represents an alkyl, cycloalkyl or aryl group, and at least one organic hydrazide of general formula III

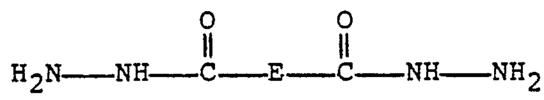

III

wherein E represents a divalent organic group.

7. A method according to any one of the preceding claims characterised in that B represents a group selected from

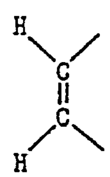 , 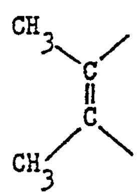 , 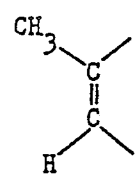 , and 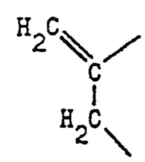 .

8. A method according to claim 7 characterised in that the at least one bisimide of general formula I comprises at least one of the following bisimides

1,2-bismaleimido ethane,
1,4-bismaleimido-butane,
1,6-bismaleimido hexane,
1,12-bismaleimido dodecane,
1,6-bismaleimido-(2,2,4-trimethyl)hexane
1,3-bismaleimido benzene,
1,4-bismaleimido benzene,
4,4′-bismaleimido diphenyl methane,
4,4′-bismaleimido diphenyl ether,
4,4′-bismaleimido diphenyl sulfide,
4,4′-bismaleimido diphenyl sulfone,
4,4′-bismaleimido dicyclohexyl methane,
2,4-bismaleimido toluene,
2,6-bismaleimido toluene,
N,N′-m-xylylene bismaleimide,
N,N′-p-xylylene bismaleimide,
N,N′-m-phenylene biscitraconic acid imide,
N,N′-4,4′-diphenylmethane citraconimide,
N,N′-4,4′-diphenylmethane bisitaconimide.

9. A method according to any one of the preceding claims characterised in that the molar ratio of butadiene groups to acrylonitrile groups in the VTBN lies in the range 99:1 to 65:35.

10. A method according to any one of the preceding claims characterised in that the VTBN is of general formula VI

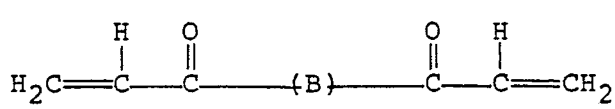

VI

wherein B is a polybutadiene/acrylonitrile polymeric backbone.

11. A method according to any one of the preceding claims characterised in that the VTBN is of General Formula VII

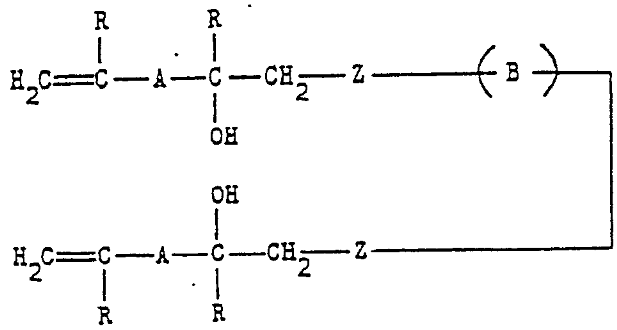

VII

wherein B is a polybutadiene/acrylonitrile polymeric backbone; Z is selected from —O—, —S—, —NH—, —O—CO—, and —O—$CH_2$—$CH_2$—; A is selected from —CO—O—$CH_2$—, —$CH_2$—O—$CH_2$—, and —$CH_2$—O—; and each R is independently hydrogen or an alkyl group containing 1 to 4 carbon atoms.

12. A method according to any one of preceding claims characterised in that the matrix has a lap shear strength at 20°C at least 50% greater than that of a fully cross-linked polyimide cured from the co-reactant alone.

13. A method according to any one of the preceding claims further characterised by the subsequent step of heating the thermosetting imide resin composition to a temperature between 100°C and 350°C to yield a fully cross-linked polymer matrix containing a dispersion of phase-separated solid particles of copolymerised VTBN and co-reactant.

14. A thermosetting imide resin composition whenever prepared by the method according to any one of claims 1 to 12.

15. A fully cross-linked polyimide matrix containing a dispersion of phase-separated solid particles of VTBN and co-reactant whenever prepared by the method of claim 13.

**Patentansprüche**

1. Verfahren zur Herstellung einer wärmehärtbaren Imidharzzusammensetzung, in dem ein flüssiges Gemisch eines Polybutadien-Acrylnitrils mit endständigen Vinylidengruppen (VTBN) und ein Coreaktant, der

a. mindestens ein N,N'-Bisimid einer ungesättigten Carbonsäure der allgemeinen Formel I

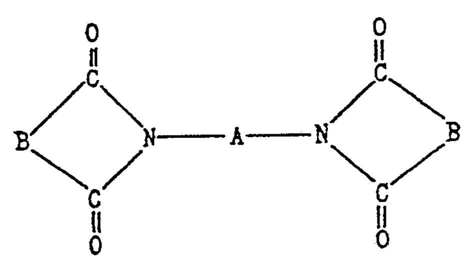

I

in der B einen zweiwertigen Rest mit einer Kohlenstoff-Kohlenstoff-Doppelbindung und A einen zweiwertigen Rest mit mindestens zwei Kohlenstoffatom darstellt, oder

b. das Imidharz-Reaktionsprodukt mindestens eines N,N'-Bisimids der allgemeinen Formel I und mindestens eines primären organischen Diamins oder organischen Hydrazids oder

c. das Imidharz-Reaktionsprodukt mindestens eines N,N'-Bisimids der allgemeinen Formel I, mindestens eines Monoimids und mindestens eines organischen Hydrazids enthält,

zu einer wärmehärtbaren, copolymerisiertes VTBN und den Coreaktanten enthaltenden Imidharzzusammensetzung chemisch umgesetzt wird, die Zusammensetzung bei einer Temperatur von 100 bis 350°C zu einer vollvernetzten Polyimidmatrix vernetzt wird, die eine Dispersion von phasengetrennten festen Teilchen des copolymerisierten VTBN und des Coreaktanten enthält.

2. Verfahren nach Anspruch 1, dadurch gekennzeichnet, daß die mittlere Teilchengröße der phasengetrennten Teilchen, bestimmt durch Rasterelektronenmikroskopie, im Bereich von 0,1 bis 10 µm, vorzugsweise 0,5 bis 8 µm, liegt.

3. Verfahren nach Anspruch 1 oder 2, dadurch gekennzeichnet, daß ein Coreaktant verwendet wird, der das Reaktionsprodukt mindestens eines N,N'-Bisimids der allgemeinen Formel I, in der A und B wie in Anspruch 1 definiert sind, und mindestens eines primären organischen Diamins mit der allgemeinen Formel II enthält,

$$H_2N—D—NH_2 \qquad II$$

in der D einen zweiwertigen Rest mit nicht über 30 Kohlenstoffatomen darstellt, und außerdem das Verhältnis der Gesamtmolzahl an Bisimid der allgemeinen Formel I zu Gesamtmolzahl an Diamin der allgemeinen Formel II im Reaktionsgemisch im Bereich von 1,2:1 bis 50:1 liegt.

4. Verfahren nach Anspruch 1 oder 2, dadurch gekennzeichnet, daß ein Coreaktant verwendet wird, der das Reaktionsprodukt mindestens eines N,N'-Bisimids der allgemeinen Formel I, in der A und B wie in Anspruch 1 definiert sind, und mindestens eines organischen Hydrazids der allgemeinen Formel III enthält,

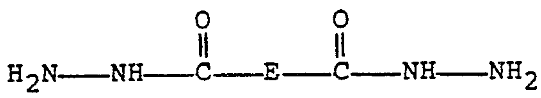

III

in der E eine zweiwertige organische Gruppe darstellt, und außerem das Verhältnis von Gesamtmolzahl an Bisimid der allgemeinen Formel I zu Gesamtmolzahl an Hydrazid der allgemeinen Formel III im Reaktionsgemisch im Bereich von 1,1:1 bis 10:1 liegt.

5. Verfahren nach Anspruch 1 oder 2, dadurch gekennzeichnet, daß ein Coreaktant verwendet wird, der das Reaktionsprodukt mindestens eines N,N'-Bisimids der allgemeinen Formel I, in der A und B wie in Anspruch 1 definiert sind, und mindestens eines organischen Hydrazids der allgemeinen Formel IV enthält,

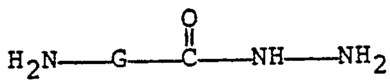

IV

in der G einen zweiwertigen organischen Rest darstellt, und außerdem das Verhältnis von Gesamtmolzahl an Bisimid der allgemeinen Formel I zu Gesamtmolzahl an Hydrazid der allgemeinen Formel IV im Bereich von 1,1:1 bis 10:1 liegt.

6. Verfahren nach Anspruch 1 oder 2, dadurch gekennzeichnet, daß ein Coreaktant verwendet wird, der das Reaktionsprodukt mindestens eines N,N'-Bisimids der allgemeinen Formel I, in der A und B wie in Anspruch 1 definiert sind, und mindestens eines Monoimids der allgemeinen Formel V,

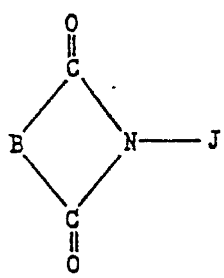

V

in der B einen zweiwertigen, eine Kohlenstoff-Kohlenstoff-Doppelbindung enthaltenden Rest und J einen Alkyl-, Cycloalkyl- oder Arylrest darstellen, und mindestens eines organischen Hydrazids der allgemeinen Formel III enthält,

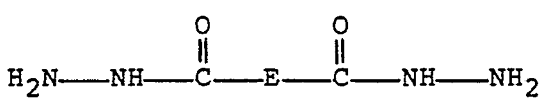

in der E einen zweiwertigen organischen Rest darstellt.

7. Verfahren nach einem der vorstehenden Ansprüche, dadurch gekennzeichnet, daß B einen Rest aus der folgenden Gruppe darstellt:

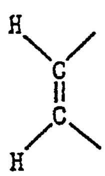 , 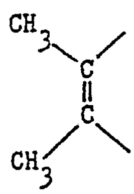 , 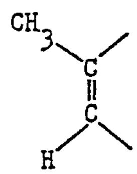 , und 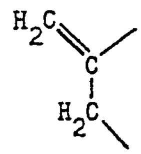

III

8. Verfahren nach Anspruch 7, dadurch gekennzeichnet, daß mindestens ein Bisimid der allgemeinen Formel I mindestens eines der folgenden Bisimide enthält:

1,2-Bismaleimido-ethan,
1,4-Bismaleimido-butan,
1,6-Bismaleimido-hexan,
1,12-Bismaleimido-dodecan,

1,6-Bismaleimido-(2,2,4-trimethyl)hexan,
1,3-Bismaleimido-benzol,
1,4-Bismaleimido-benzol,
4,4'-Bismaleimido-diphenylmethan,
4,4'-Bismaleimido-diphenylether,
4,4'-Bismaleimido-diphenylsulfid,
4,4'-Bismaleimido-diphenylsulfon,
4,4'-Bismaleimido-dicyclohexylmethan,
2,4'-Bismaleimido-toluol,
2,6-Bismaleimido-toluol,
N,N'-m-Xylylen-bismaleimid,
N,N'-p-Xylylen-bismaleimid,
N,N'-m-Phenylen-biscitraconsäureimid,
N,N'-4,4'-Diphenylmethan-citraconimid,
N,N'-4,4'-Diphenylmethan-bisit aconimid.

9. Verfahren nach einem der vorstehenden Ansprüche gekennzeichnet durch Verwendung eines Molverhältnisses von Butadiengruppen zu Acrylnitrilgruppen in dem VTBN im Bereich von 99:1 bis 65:35.

10. Verfahren nach einem der vorstehenden Ansprüche, gekennzeichnet durch Verwendung eines VTBN der allgemeinen Formel VI

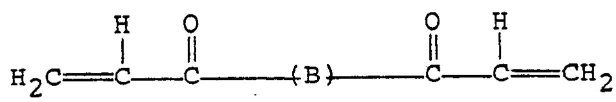

VI

in der B ein Polybutadien-Acrylnitril -Polymergerüst ist.

11. Verfahren nach einem der vorstehenden Ansprüche, gekennzeichnet durch Werwendung eines VTBN der allgemeinen Formel VII

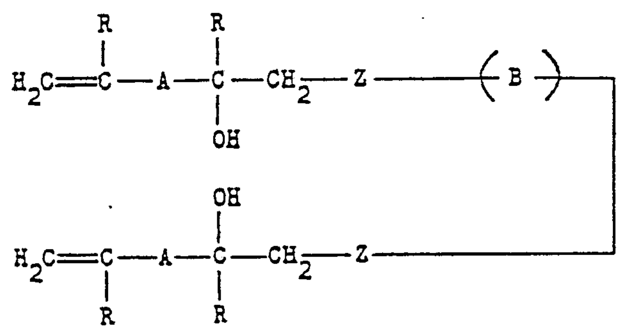

VII

in der B ein Polybutadien-Acrylnitro -Polymergerüst ist, Z unter —O—, —S—, —NH—, —O—CO— und —O—$CH_2$—$CH_2$— gewählt wird, A unter —COO—$CH_2$—, —$CH_2$—O—$CH_2$— und —$CH_2O$— gewählt wird und R unabhängig je Wasserstoff oder ein $C_{1-4}$-Alkylrest ist.

12. Verfahren nach einem der vorstehenden Ansprüche, dadurch gekennzeichnet, daß die Matrix eine um mindestens 50% größere Überlappungsscherfestigkeit bei 20°C hat als ein vollvernetztes, aus dem Coreaktant allein gehärtetes Polyimid.

13. Verfahren nach einem der vorstehenden Ansprüche, dadurch gekennzeichnet, daß die wärmehärtbare Imidharzzusammensetzung dann auf eine Temperatur zwischen 100 und 350°C zu einer vollvernetzten Polymermatrix erhitzt wird, die eine Dispersion von phasengetrennten festen Teilchen des copolymerisierten VTBN und des Coreaktanten enthält.

14. Wärmehärtbare Imidharzzusammensetzung, hergestellt nach dem Verfahren gemäß einem der Ansprüche 1 bis 12.

15. Vollvernetzte Polyimidmatrix, die eine Dispersion von phasengetrennten festen Teilchen von VTBN und Coreaktant enthält und nach dem Verfahren gemäß Anspruch 13 hergestellt worden ist.

**Revendications**

1. Procédé pour préparer une composition de résine d'imide thermodurcissable, comprenant la réaction chimique d'un mélange liquide d'un polybutadiène/acrylonitrile terminé par des groupes vinylidènes (BNTV) et d'un co-réactif comprenant

a) au moins un N,N'-bisimide d'un acide carboxylique insaturé de formule générale I

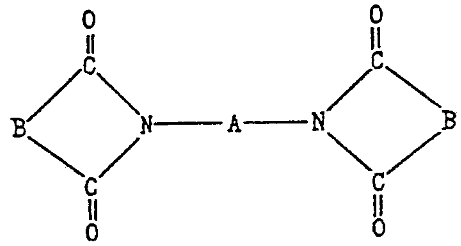

I

dans laquelle B représente un radical divalent contenant une double liaison de carbone à carbone, et A représente un radical divalent comportant au moins deux atomes de carbone, ou

b) la résine d'imide qui est le produit de réaction d'au moins un N,N'-bisimide de formule générale I et d'au moins une diamine organique primaire ou un hydrazide organique, ou

c) la résine imide qui est le produit de réaction d'au moins un N,N'-bisimide de formule générale I, d'au moins un monoimide et d'au moins un hydrazide organique,

pour obtenir une composition de résine d'imide thermodurcissable contenant du BNTV copolymérisé et un co-réactif, ladite composition étant durcissable à une température comprise entre 100°C et 350°C pour donner une matrice de polyimide entièrement réticulé contenant une dispersion, en phase séparée, de particules solides de BNTV et de co-réactifs copolymérisés.

2. Procédé selon la revendication 1, caractérisé en ce que la dimension particulaire moyenne des particules en phase séparée, telle qu'elle est déterminée par examen au microscope électronique à balayage, se situe entre 0,1 et 10 µm, de préférence entre 0,5 et 8 µm.

3. Procédé selon la revendication 1 ou la revendication 2, caractérisé en ce que le co-réactif comprend le produit de la réaction d'au moins un N,N'-bisimide de formule générale I, dans laquelle A et B sont tels que définis à la revendication 1, et d'au moins une diamine organique primaire de formule générale II

$$H_2N—D—NH_2 \qquad II$$

dans laquelle D représente un radical divalent ne comportant pas plus de 30 atomes de carbone, et caractérisé en outre en ce que le rapport du nombre total de moles de bisimide de formule générale I au nombre total de moles de diamine de formule générale II dans le mélange réactionnel se situe entre 1,2:1 et 50:1.

4. Procédé selon la revendication 1 ou la revendication 2, caractérisé en ce que le co-réactif est constitué par, ou comprend, le produit de la réaction d'au moins un N,N'-bisimide de formule générale I, dans laquelle A et B sont comme définis à la revendication 1, et d'au moins un hydrazine organique de formule générale III

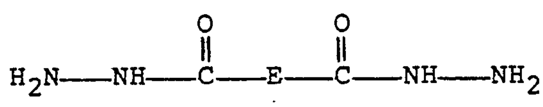

III

dans laquelle E représente un groupe organique divalent, et caractérisé encore en ce que le rapport du nombre total de moles de bisimide de formule générale I au nombre total de moles de l'hydrazide de formule générale III se situe dans le mélange réactionnel entre 1,1:1 et 10:1.

5. Procédé selon la revendication 1 ou la revendication 2, caractérisé en ce que le co-réactif est constitué par, ou comprend, le produit de la réaction d'au moins un N,N'-bisimide de formule générale I, dans laquelle A et B sont comme définis à la revendication 1, et d'au moins un hydrazide organique de formule générale IV

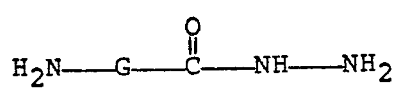

IV

dans laquelle G représente un groupe organique divalent, et caractérisé encore en ce que le nombre total de moles de bisimide de formule générale I au nombre total de moles d'hydrazide de formule générale IV se situe entre 1,1:1 et 10:1.

6. Procédé selon la revendication 1 ou la revendication 2, caractérisé en ce que le co-réactif est constitué par, ou comprend, le produit de la réaction d'au moins un N,N'-bisimide de formule générale I, dans laquelle A et B sont comme définis à la revendication 1, et d'au moins un monoimide de formule générale V

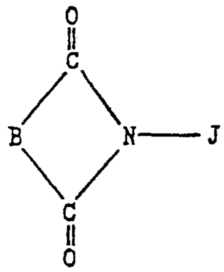

V

dans laquelle B représente un radical divalent contenant une double liaison de carbone à carbone, et J représente un groupe alkyle, cycloalkyle ou aryle, et d'au moins un hydrazide organique de formule générale III

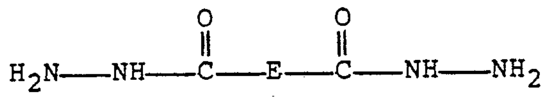

III

dans laquelle E représente un groupe organique divalent.

7. Procédé selon l'une quelconque des revendications précédentes, caractérisé en ce que B représente un groupe choisi parmi

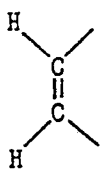 , 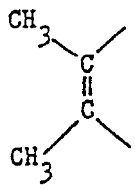 , 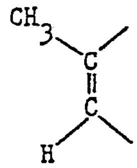 , et 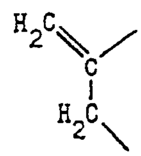

8. Procédé selon la revendication 7, caractérisé en ce que l'au moins un bisimide de formule générale I est constitué par, ou comprend, au moins l'un des bisimides suivants:

le 1,2-bismaléimido éthane,
le 1,4-bismaléimido butane,
le 1,6-bismaléimido hexane,
le 1,12-bismaléimido dodécane,
le 1,6-bismaléimido-(2,2,4-triméthyl)hexane,
le 1,3-bismaléimido benzène,
le 1,4-bismaléimido benzène,
le 4,4'-bismaléimido diphényl méthane,
l'éther oxyde de 4,4'-bismaléimido diphényle,
le sulfure de 4,4'-bismaléimido diphényle,
le 4,4'-bismaléimido diphényl sulfone,
le 4,4'-bismaléimido dicyclohexyl méthane,
le 2,4-bismaléimido toluène,
le 2,6-bismaléimido toluène,
le N,N'-m-xylylène bismaléimide,
le N,N'-p-xylylène bismaléimide,
l'imide d'acide N,N'-m-phénylène biscitraconique,
le N,N'-4,4'-diphénylméthane citraconimide,
le N,N'-4,4'-diphénylméthane bisitaconimide.

9. Procédé selon l'une quelconque des revendications précédentes, caractérisé en ce que le rapport molaire des groupes butadiène aux groupes acrylonitrile se situe dans le BNTV entre 99:1 et 65:35.

10. Procédé selon l'une quelconque des revendications précédentes, caractérisé en ce que le BNTV répond à la formule générale VI

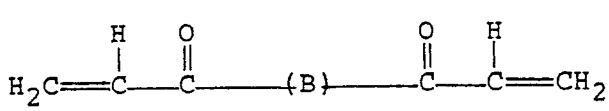

VI

dans laquelle B est une charpente polymère de polybutadiène/acrylonitrile.

11. Procédé selon l'une quelconque des revendications précédentes, caractérisé en ce que le BNTV répond à la formule générale VII

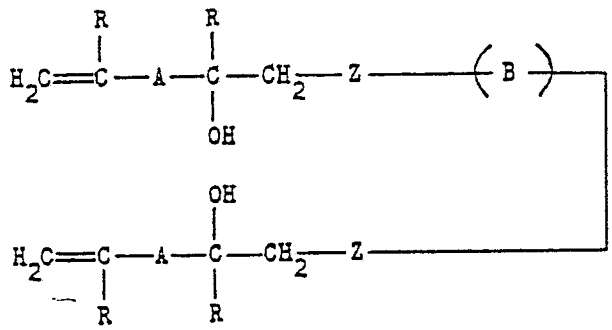

VII

dans laquelle B est une charpente polymère de polybutadiène/acrylonitrile; Z est choisi parmi —O—, —S—, —NH—, —O—CO— et —O—$CH_2$—$CH_2$—; A est choisi parmi —CO—O—$CH_2$—, —$CH_2$—O—$CH_2$— et —$CH_2$—O—; et chaque R représente, indépendamment, un atome d'hydrogène ou un groupe alkyle contenant 1 à 4 atomes de carbone.

12. Procédé selon l'une quelconque des revendications précédentes, caractérisé en ce que la matrice présente une résistance au cisaillement d'un joint à recouvrement, à 20°C supérieure d'au moins 50% à la résistance d'un polyimide pleinement réticulé et obtenu par maturation de durcissement du co-réactif seul.

13. Procédé selon l'une quelconque des revendications précédentes, caractérisé en outre par l'étape subséquente consistant à soumettre la composition de résine d'imide thermodurcissable à un chauffage jusqu'à une température comprise entre 100°C et 350°C pour obtenir une matrice polymère pleinement réticulée contenant une dispersion de particules solides, en phase séparée, de BNTV et de co-réactifs copolymérisés.

14. Composition de résine d'imide thermodurcissable, chaque fois où elle a été préparée par le procédé selon l'une quelconque des revendications 1 à 12.

15. Matrice de polyimide pleinement réticulée, contenant une dispersion de particules solides, en phase séparée, de BNTV et d'un co-réactif, chaque fois où cette matrice a été préparée par le procédé selon la revendication 13.